(19) Europäisches Patentamt
European Patent Office
Office européen des brevets

(11) Publication number: **0 050 486**
**B1**

(12) **EUROPEAN PATENT SPECIFICATION**

(45) Date of publication of patent specification: **26.09.84**

(51) Int. Cl.$^3$: **C 09 D 9/00**

(21) Application number: **81304821.2**

(22) Date of filing: **15.10.81**

(54) **Removing siccative coatings from substrates.**

(30) Priority: **15.10.80 US 197135**

(43) Date of publication of application:
**28.04.82 Bulletin 82/17**

(45) Publication of the grant of the patent:
**26.09.84 Bulletin 84/39**

(84) Designated Contracting States:
**BE DE FR GB IT SE**

(56) References cited:
**DE-A-2 436 488**
**FR-A-2 213 971**
**GB-A-1 075 516**
**US-A-3 551 340**

(73) Proprietor: **AMCHEM PRODUCTS, INC.**
**Brookside Avenue**
**Ambler Pennsylvania 19002 (US)**

(72) Inventor: **Carandang, Carmen Maneclang**
**129 Caroline Drive**
**Oaks Pennsylvania 19456 (US)**

(74) Representative: **Sanderson, Laurence Andrew et al**
**Sanderson & Co. European Patent Attorneys**
**97 High Street**
**Colchester Essex (GB)**

**EP 0 050 486 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to removing siccative coatings from substrates coated therewith. More particularly, the invention is concerned with an aqueous alkaline solution and processes employing it for stripping siccative coatings from metallic substrates.

The term "siccative coatings" is used herein in its accepted meaning i.e. to embrace protective and/or decorative coatings of the kind which when applied in liquid form to a substrate form a film thereon which adheres to and dries on the surface to form the coating. Examples of such siccative coatings are shellac varnishes, phenolic varnishes, paints of the drying-oil types, cathodic electrodeposition paints, and paints which fall into the classes of alkyds, modified alkyds, modified phenolics, modified melamines, baked phenolics, epoxy-resins, polyurethanes, silicones, acrylics, vinyls, and the like. Although the present invention has broader applicability, it will be described in connection with the stripping of siccative coatings from metal substrates, such as steel panels.

There are many known compositions intended for removing siccative coatings from a wide variety of substrates, including wood and metals. Such compositions are useful in very diverse fields, ranging from furniture stripping or other generally similar home-restoration applications all the way through a variety of industrial uses, such as in the automotive industry where siccative coatings applied during manufacture to protect various component parts must be removed prior to final painting and finishing.

Perhaps the simplest of all stripping compositions are those which essentially consist of an aqueous alkaline solution, which can be used at high temperatures, usually a rolling boil. Alkaline stripping compositions of this kind are believed to function by breaking ester or ether linkages, which hold the polymer units of the paint film together, forming the corresponding soaps. This however is a relatively slow procedure, in which alkaline base is consumed, and contaminants are formed in the composition.

It is possible to improve the effectiveness of aqueous alkaline solutions by adding thereto a wetting agent, which will accelerate the stripping operation by penetrating or permeating the paint film subsequent to partial removal thereof by degradation. Further improvements can be achieved by the incorporation of detergents and emulsifiers, which will accelerate the stripping process by deterging and emulsifying or solubilizing plasticizer and unpolymerized binder in the paint film.

From what has been said above it should already be clear that when removing siccative coatings from substrates coated therewith the stripper composition employed will desirably be one which acts in one or more of the following ways:

to break ester or ether linkages using strong alkali;

to deterge and emulsify plasticizer or other components of lower molecular weights with appropriate surfactants;

to permeate cracks and fissures in the paint, especially through voids or around pigment particles by a wetting-out action;

to dissolve water-soluble solvent in resinous polymers to facilitate permeation;

to dissolve soaps formed by reaction with the alkali, using primary alcohols and glycols to avoid having these soaps hinder further reaction; and

to break the bond between the substrate and the paint film by whatever means possible, including superficial action on the substrate by use of sequestrants.

The stripper composition moreover should preferably be one which will penetrate the paint film rapidly, and with only limited disintegration of the film.

The aqueous alkaline compositions discussed above, which are employed at elevated temperature and are therefore often referred to as "hot stripper compositions", generally are effective in removing most siccative finishes; but they are quite ineffective in removing cathodic electrodeposition paints, and not particularly effective in removing carbon-to-carbon bonds. Penetration and bond-breaking mechanisms are of primary importance with acrylic and vinyl paints, and the paint tends to be sheeted off with little disintegration.

It has however already been discovered that if furfuryl alcohol is added to such hot stripper compositions they become effective to remove acrylic and vinyl paints as well as cathodic electrodeposition paints. It appears that the furfuryl alcohol somehow activates the composition so that it penetrates the paint film, allowing attack on the bonds between the substrate and the paint film. Another such composition-activating compound is tetrahydrofurfuryl alcohol. It has moreover been found that a combination of these two activators is more effective that either one of them alone. Another material which has been used in stripping compositions is an alkoxylated furfuryl alcohol.

There are however problems about the use of these known activated hot stripper compositions. Above all, with continued use the activator is lost as it is boiled off. Furfuryl alcohol for instance forms an azeotrope with water, and the boiling point of that azeotrope falls within the operative temperature range for the hot stripper composition. Therefore, either the bath of composition must be dumped and a fresh bath made up, or the furfuryl alcohol and water lost as the azeotrope boils off must be replaced either continuously or at least periodically.

We however have now found that it is possible to formulate a hot stripper composition which

both is effective and has an increased bath life, and which moreover is particularly effective in the stripping of electrodeposited paint films.

According to one aspect of the present invention there is provided an aqueous alkaline stripper composition, for use at elevated temperatures to remove siccative coatings from substrates coated therewith, comprising one or more alkaline compounds in a concentration such as to impart a pH of 9.5 or more to the composition, together with an effective amount of at least two of the following three activator materials:

(i) tetrahydrofurfuryl alcohol and furfuryl and/or tetrahydrofurfuryl alcohol ethoxylates of the general formulae

(ii) 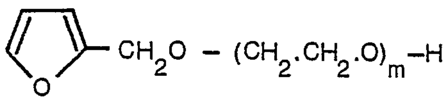

and (iii) 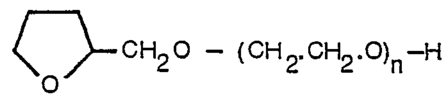

wherein

*m* and *n*, which may be the same or different, each represent the average degree of ethoxylation in the respective ethoxylates, and each of them lies in the range of from 0.5 to 10.

As should be apparent, the average degree of ethoxylation represented respectively by *m* and *n* is in each case the number of moles of ethylene oxide per mole of the alcohol (reacted and unreacted) in the reaction product of ethylene oxide with either furfuryl alcohol or tetrahydrofurfuryl alcohol. Thus for example when *m* or *n* is 1, the reaction product will be a mixture containing predominantly mono-ethoxylated furfuryl or tetrahydrofurfuryl alcohol but also small amounts of the unreacted alcohol and of polyethoxylated alcohol(s). When *m* or *n* is a fraction less than 1, relatively larger quantities of unreacted alcohol will be present in the mixture; whereas when *m* or *n* is greater than 1, relatively larger quantities of polyethoxylated alcohol(s) will be present.

All the ingredients of the aqueous stripper composition must naturally be present in concentrations effective to remove the siccative coating from a substrate coated therewith. The ingredients will preferably be present in concentrations effective to strip cathodic electrodeposition paint from a substrate coated therewith in a period within the range of from 5 seconds to 1 hour, working at a composition temperature in the range of from 180° to 220°F (approx. 82°—140°C). As will emerge below, it appears that the unique combination of ingredients in the compositions of this invention together exert synergistic effects.

As will be further explained subsequently, the compositions will preferably also contain a sequestering agent in an amount effective substantially to prevent precipitation, and/or a composition-stabilizing compound, selected from the group consisting of aliphatic primary alcohols, aliphatic secondary alcohols, alkylamines and mixtures thereof, in an amount effective substantially to prevent separation of the composition upon standing, and/or one or more surfactants at a concentration of 0.5 to 20 g/l. While effective compositions may be formulated that do not contain any of the aforementioned, it is preferred that one or more of these three kinds of optional additives should be present in the hot stripper compositions of this invention.

The total concentration of the activator materials (i)—(iii) present should preferably be at least 7 g/l, with at least two of these activator materials being each present in a concentration of at least 2.5 g/l.

The alkaline compound(s) for use in the compositions of this invention may be any of the compounds known to the art that produce a strongly alkaline solution when dissolved in water. Preferably, the alkaline compound is supplied in the form of a compound or a mixture of compounds selected from the group consisting of alkali metal and ammonium hydroxides, carbonates, silicates and phosphates, as well as amines. We particularly prefer to employ an alkali metal hydroxide or a mixture of two or more alkali metal hydroxides, and above all a mixture of sodium hydroxide and potassium hydroxide.

The alkaline compound(s) must be present in the aqueous composition of this invention in a concentration effective to impart a pH to the composition in the range of from 9.5 to 14+, and preferably in the range of from 12 to 14+. Generally speaking, the concentration of the alkaline compound and thus the pH value of the composition should be greater when the composition is employed at lower temperatures than when working at higher temperatures. For most purposes we have found that the concentration of alkaline compound(s) in the composition should be at least 80 g/l, and more preferably in the range of from 150 to 350 g/l.

One of the essential activator materials amongst the ingredients of the compositions of the present invention is tetrahydrofurfuryl alcohol — hereinafter for brevity referred to as "THFA". As already previously explained, it was known to use this material in stripper compositions, even indeed in

combination with furfuryl alcohol; but as will be seen from the test data reported below, we have found that the use of THFA in combination with the ethoxylated form of furfuryl alcohol yields improved results. The effectiveness of a composition containing both the ethoxylated material described below and THFA in stripping siccative coatings from substrates coated therewith has been found to be greater than that of a composition containing either of the ingredients in equivalent amounts, thus evidencing a synergistic action. THFA is preferably used at a concentration of at least 2.5 g/l, especially at a concentration in the range of from 2.5 to 200 g/l, and above all at a concentration in the range of from 4 to 100 g/l.

The inclusion of the ethoxylate(s) (i) and/or (ii) above exhibits certain definite advantages. They do not form an azeotrope with water (as does furfuryl alcohol) and they therefore do not become rapidly depleted from a working bath by non-functional mechanisms. Because the ethoxylated material remains in the bath, the stripper composition displays an increased effectiveness (more coating stripped/volume of composition) and thus one achieves a longer bath life.

Indeed, we have found that a typical hot stripper composition of this invention can be used to strip siccative coatings from substrates coated therewith for a significantly extended period, perhaps two to three times longer than is possible with otherwise comparable compositions instead containing either furfuryl alcohol alone or furfuryl alcohol together with tetrahydrofurfuryl alcohol.

A preferred ethoxylate for use in the compositions of this invention is the reaction product of furfuryl alcohol with ethylene oxide wherein $m$ is in the range of from 0.5 to 1.5. Particularly preferred is such a product in which $m$ is from 0.85 to 1.08.

Another preferred ethoxylate for use in the compositions of this invention is the reaction product of tetrahydrofurfuryl alcohol with ethylene oxide wherein $n$ is in the range of from 3 to 8.

The ethoxylate(s) used in the composition must naturally be present in an effective concentration, which will depend on the type of siccative coating to be removed, as well as on the thickness of the coating. Higher concentrations are generally required to remove siccative coatings such as a cathodic electrodeposition paint than are required to remove ones such as an alkyd paint. The ethoxylate will preferably be present in a concentration effective (in a fresh composition, i.e. that has not previously been used to strip siccative coatings) to remove cathodic electrodeposition paint from a substrate coated therewith in a period within the range of from 5 seconds to 1 hour, at a composition temperature in the range of from 180° to 220°F (approx. 82°—104°C). For most purposes we have found that the ethoxylated material should be present in a concentration of at least 5 g/l, and preferably within the range of from 5 to 200 g/l. Particularly preferred concentrations are in the range of from 10 to 100 g/l, and above all from 20 to 50 g/l.

The addition of a sequestering agent to the compositions of this invention has been found to be very advantageous, since its presence ensures that the composition may be effectively employed regardless of the hardness of the water used to formulate it, without generally experiencing precipitation of the calcium and magnesium ions that cause water hardness; and more surprisingly, its presence additionally improves the ability of the compositions to remove siccative coatings from substrates coated therewith. While we do not wish to be limited by any theoretical considerations, we assume that this can perhaps be explained upon the basis that the sequestering agent aids in breaking the bond between the substrate and the paint film, through superficial action on the substrate.

Representative of the sequestering agents which may be employed singly or in admixture in the compositions of this invention are hydroxy-carboxylic acids such as gluconic, citric and tartaric acids, aminopolycarboxylic acids such as ethylenediaminetetraacetic acid, and various commercial preparations — such as Belzak AC, manufactured by Belzak Corporation. The currently-preferred sequestering agents are gluconic acid and/or Belzak AC.

The sequestering agent should preferably be added in a concentration which will be effective substantially to prevent precipitation of the calcium and magnesium ions that are the primary cause of water-hardness. Generally speaking, greater amounts of the sequestering agent will therefore be required when the hardness of the water is high than when it is low. For most purposes we have found that the concentration of sequestering agent should be at least 1 g/l, and preferably in the range of from 1 to 100 g/l.

A composition-stabilizing compound can also with advantage be incorporated in the compositions of this invention. Such composition-stabilizing compounds include aliphatic primary alcohols, aliphatic secondary alcohols, alkylamines and mixtures thereof. Without limiting ourselves by any theoretical considerations, we think that such stabilizing compounds probably act as a secondary solvent, miscible in water, which functions to provide a more uniform solution that will not separate upon standing. The stabilizing compounds are believed also to increase the effectiveness of the composition by functioning to dissolve soaps that are formed by reaction of the siccative coating with the alkaline compound, thereby rendering the soaps ineffective to hinder further such reaction.

The composition-stabilizing compound will preferably be one or a mixture of more than one of the following, namely methanol, monoethanolamine, diethylene glycol, propylene glycol, dipropylene glycol and $n$-butyl amine. The most preferred stabilizing compounds are methanol, monoethanolamine, diethylene glycol and $n$-butyl amine.

The composition-stabilizing compound will preferably be present in a concentration effective

substantially to prevent separation of the composition of the invention. For most purposes we have found that the composition-stabilizing compound should be added in a concentration of at least 10 g/l, and preferably in the range of from 50 to 200 g/l.

Although not essential, the composition of this invention will preferably also contain one or more surfactants or wetting agents, which presumably may serve to deterge and emulsify plasticizers or other components of lower molecular weights in the film of the siccative coating, thereby promoting removal thereof. There appears to be nothing critical about the choice of surfactant or wetting agent employed; and amphoteric, non-ionic and anionic surfactants may all be employed. Currently preferred surfactants are: Miranol JEM Concentrate, manufactured by Miranol Chemical Co.; and Sulfonate OA—5, manufactured by Cities Service Co. ["Sul-fon-ate OA—5" is a trademark for an anionic wetting agent said to be sulphonated oleic acid, sodium salt].

The composition will preferably contain a concentration of at least 0.5 g/l of one or more surfactants; particularly advantageous concentrations are in the range of from 0.5 to 20 g/l.

Preferred compositions in accordance with this invention are those which contain an alkaline component in a concentration within the range of from 150 to 350 g/l, the alkaline component in turn comprising from 3.5 to 350 g/l of sodium hydroxide and/or from 3.5 to 350 g/l of potassium hydroxide, said composition also containing from 1 to 100 g/l of a sequestering agent, from 50 to 100 g/l of one or more composition-stabilizing compounds being methanol, monoethanolamine, diethylene glycol and/or *n*-butyl amine, from 2.5 to 200 g/l of tetrahydrofurfuryl alcohol, and from 5 to 200 g/l of an ethoxylate (ii) being the reaction product of furfuryl alcohol and ethylene oxide wherein $m$ is in the range of from 0.5 to 1.5.

In these preferred compositions the ethoxylate (ii) will desirably be one in which $m$ is in the range of from 0.85 to 1.08. They will also advantageously include one or more surfactants in a concentration in the range of from 0.5 to 20 g/l.

According to another aspect, this invention also provides a process for stripping siccative coatings from substrates coated therewith, in which the coated substrate is contacted with a stripper composition in accordance with the present invention as herein described, at a composition temperature and for a time sufficient to remove the siccative coating from the substrate.

The process of this invention displays itself to best advantage when the siccative coating being stripped is a cathodically-electrodeposited paint film.

Siccative coatings may be stripped from substrates coated therewith by contacting the coated substrate with the hot stripper composition at elevated temperatures, preferably when maintained at a rolling boil. The compositions of the invention are for most purposes best employed at a temperature of at least 140°F (60°C), and especially in the range of from 180° to 220°F (approx. 82—104°C).

The minimum period of contact between the composition and the substrate which will be sufficient to remove the siccative coating from the substrate will depend on a number of factors, including the nature of the siccative coating, the number of substrates previously contacted with the composition, the temperature of the composition, the total coated surface area of the substrate in contact with the composition, the thickness of the siccative coating, and the concentration of various of the constituents. Generally speaking, we have found that contact times effective to remove the siccative coating from a substrate coated therewith will be within the range of from 5 seconds up to 1 hour at a temperature within the range of from 180° to 220°F (approx. 82—104°C) for a fresh composition, i.e. a composition that has not previously been used to remove the siccative coatings. It should be borne in mind that the contact period required to remove the siccative coating will tend to increase when the temperature of the composition is decreased, when the number of coated substrates previously contacted with the composition is increased, when the surface area of coated substrate in contact with the composition is increased, when the thickness of the coating to be stripped is increased, and/or when the concentration of the composition-activating compound of the invention is decreased.

The coated substrates to be stripped may be contacted with the compositions of the invention according to any of the methods known to the art. Generally speaking, the coated substrate to be stripped will be immersed in a bath of the composition. Once the siccative coating has been removed, the substrate will preferably be rinsed with water and then dried.

The hot stripper composition may be initially formulated as an aqueous concentrate, which subsequently is diluted with water to make-up the aqueous alkaline composition of the invention.

Such an aqueous concentrate should be so formulated that when it is added to water at a concentration in the range of from 10 to 99% by volume, it will make-up an aqueous alkaline hot stripper composition with a pH within the range of from 9.5 to 14+, which will be effective at elevated temperatures to remove siccative coatings from substrates coated therewith.

The aqueous concentrate will preferably be added to water at a concentration of from 40% to 60% by volume; and when so added the alkaline component therein will desirably be present in a concentration which imparts a pH in the range of from 12 to 14+ to the resultant composition. For most purposes we have found that the alkaline component should preferably constitute from 10 to 50 wt. % of the concentrate.

The THFA and the ethoxylate(s) should also be present in the concentrate in such concentration that the hot stripper composition produced by diluting the concentrate will contain concentrations of these ingredients which will be effective to remove cathodic electrodeposition paint from a substrate coated therewith in a period in the range of from 5 seconds to 1 hour, at a composition temperature in the range of from 180° to 220°F (approx. 82—104°C). We have found that for most purposes THFA typically can constitute at least 1 wt. %, and preferably in the range of from 1 to 20 wt. %, of the concentrate.

The concentrate may also optionally but desirably contain one or more of the following other components, each as previously defined herein, namely a sequestering agent in concentration of at least 0.1 wt. % and preferably in the range of from 0.1 to 10 wt. %; a composition-stabilizing compound in a concentration of at least 1 wt. %, and preferably in the range of from 1 to 20 wt. %, and one or more surfactants, at a concentration of at least 0.1 wt. %, and preferably in the range of from 0.1 to 10 wt. %.

Particularly preferred concentrates contain: from 10 to 85 wt. % water; from 10 to 50 wt. % of an alkaline component, which in turn comprises from 0.5 to 50 wt. % of sodium hydroxide and from 0.5 to 50 wt. % of potassium hydroxide; from 0.1 to 10 wt. % of a sequestering agent; from 1 to 20 wt. % of composition-stabilizing compound(s) being one or more of the following, namely methanol, monoethanolamine, diethylene glycol and *n*-butyl amine; from 1 to 20 wt. % of the reaction product of furfuryl alcohol and ethylene oxide being an ethoxylate (ii) wherein *m* is in the range of from 0.5 to 1.5, and preferably in the range of from 0.85 to 1.08. This preferred concentrate will moreover also advantageously contain one or more surfactants, at a concentration in the range of from 0.1 to 10 wt. %.

Even though the ethoxylate(s) included in the compositions may properly be regarded as nonvolatile when compared with furfuryl alcohol (a property which as already stated results in an increased effectiveness and bath life relative to conventional compositions containing furfuryl alcohol) these ethoxylate(s) nevertheless are gradually depleted during continuous use of the composition. It does therefore become desirable to replenish a bath of the composition after a certain period of use. The point in time at which replenishment becomes necessary may be readily determined by monitoring the period needed to strip a siccative coating from a substrate; as the activator is depleted, this period will increase, until eventually it will reach a stripping period that is commercially unacceptable. In this way one can readily determine when the addition of a replenishing composition is required.

We have found that when replenishing the composition, it is generally speaking best to restore the concentration of the ethoxylate(s) to about the initial concentration without increasing the concentration of alkaline compound beyond its concentration in the initial composition. The replenisher composition of the invention will therefore generally contain a higher concentration of the ethoxylate(s) and a lower concentration of the alkaline compound than may be desirable in the hot stripper composition itself.

A replenisher composition suitable for use in replenishing the hot stripper composition of this invention will frequently contain 1 to 200 g/l of the alkaline compound, sufficient to impart a pH to the replenisher of 9.5 to 14+, preferably 12 to 14+, as well as from 50 to 200 g/l of the ethoxylate(s) and at least 50 g/l, and preferably from 50 to 200 g/l, of the THFA.

Although not essential, the replenisher composition will preferably contain one or more of the following previously defined components, namely a sequestering agent in a concentration of from 2.5 to 100 g/l; a composition-stabilizing compound in a concentration of from 10 to 200 g/l; and one or more surfactants, in a concentration of from 1 to 100 g/l.

In passing it may be observed that, although the primary utility of the replenisher composition is naturally in the replenishment of the hot stripper composition of this invention, yet we have found that the replenisher composition may also be effectively employed to replenish those prior art compositions which contain furfuryl alcohol and/or THFA.

## EXAMPLES

In order that the invention may be well understood it will now be described in more detail, though only by way of illustration, in and with reference to the following examples:—

It should be noted that the reaction product (FA/ETO) of furfuryl alcohol (FA) and ethylene oxide (ETO) employed in the following examples is an ethoxylate, manufactured by the Quaker Oats Company, of Chicago, Illinois, United States of America, of general formula (ii) wherein *m* is in the range of from 0.86 to 1.08; and which may be further defined by the following experimentally-determined values: specific gravity, 1.132—1.134 at 25°C; refractive index, $N_d^{20}$ = 1.4844—1.4846; flash point (approx.) 225°F (107°C); hydroxyl number 400 $\pm$ 14; Gardner colour, 18; viscosity, 13 cps.

### Examples 1 to 3

Concentrates 1, 2 and 3 were first prepared, which contained the components in the concentrations indicated below. Stripping compositions 1, 2 and 3 were then prepared (each from the concentrate bearing the same number) by diluting a given volume of the concentrate with an equal volume of water.

Concentrate & Composition No. 1

| Ingredient | Concentrate 1 (wt. %) | Composition 1 (g/l) |
| --- | --- | --- |
| Water | 8.0 | |
| Sequestering agent (Belzac AC) | 1.5 | 10.31 |
| Sodium hydroxide (50%) | 34.0 | 233.75 |
| Potassium hydroxide (50%) | 32.0 | 220.00 |
| Diethylene glycol | 10.0 | 68.75 |
| FA/ETO | 9.0 | 61.88 |
| THFA | 5.0 | 34.48 |
| Amphoteric surfactant (Miranol JEM Conc.) | 0.5 | 3.44 |
| | 100.0% | |

Concentrate & Composition No. 2

| Ingredient | Concentrate 2 (wt. %) | Composition 2 (g/l) |
| --- | --- | --- |
| Water | 8.0 | |
| Sequestering agent (Belzac AC) | 1.5 | 10.59 |
| Sodium hydroxide (50%) | 30.0 | 211.80 |
| Potassium hydroxide (50%) | 30.0 | 211.80 |
| Diethylene glycol | 13.0 | 91.78 |
| FA/ETO | 9.0 | 63.54 |
| THFA | 5.0 | 35.30 |
| Monoethanolamine | 1.0 | 7.06 |
| Composition-stabilizer (Dowanol EPh, manufactured by Dow Chemical Company) | 1.0 | 7.06 |
| Anionic surfactant (Sulfonate OA—5) | 1.0 | 7.06 |
| Amphoteric surfactant (Miranol JEM Conc.) | 0.5 | 3.53 |

Concentrate & Composition No. 3

| Ingredient | Concentrate 3 (wt. %) | Composition 3 (g/l) |
|---|---|---|
| Water | 11.0 | |
| Sequestering agent (Belzac AC) | 1.5 | 10.22 |
| Sodium hydroxide (50%) | 34.0 | 231.54 |
| Potassium hydroxide (50%) | 32.0 | 217.92 |
| Diethylene glycol | 10.0 | 68.10 |
| FA/ETO | 6.0 | 40.86 |
| THFA | 5.0 | 34.05 |
| Amphoteric surfactant (Miranol JEM Conc.) | 0.5 | 3.41 |

Equal volumes of Composition 1, Composition 2, and Composition 3 were placed in three baths, which were heated to and maintained in a temperature within the range 210—220°F (99—104°C) during the course of use, except as otherwise noted below.

Five sets of steel panels (3 per set) each measuring 4 inches by 12 inches (approx. 10.2 cm × 30.5 cm) were precoated with a cathodic electrodeposition paint, and thereafter employed in this experiment, which was designed to simulate continuous use of the composition to strip numerous panels. One of the panels in each set was then immersed in Composition 1, the second in Composition 2, and the third in Composition 3, in accordance with the sequence of operations which with a description of the test conditions and the results of testing are set forth in Table 1 below:—

TABLE 1

| Bath Conditions Sequence of Alteration | Panel Immersion Time/Percentage of Paint Removed From Panels During Said Immersion Time | | |
|---|---|---|---|
| | Composition 1 | Composition 2 | Composition 3 |
| initial bath; no paint added; no panels previously immersed therein | | | |
| First set of panels immersed | 6—7 mins./100% | 6—7 mins./100% | 8—9 mins./100% |
| Panels removed; 5 grams of paint added to each bath; baths maintained at a boil for about 15 minutes. | | | |
| second set of panels immersed | 8—8½ mins./100% | 8½ mins./100% | 11—12 mins./100% |
| Panels removed; 5 grams of paint added to each bath; baths maintained at a boil for about 15 minutes | | | |
| third set of panels immersed | 10—11 mins./100% | 9—10 mins./100% | 13 mins./100% |

TABLE 1 (continued)

| | Composition 1 | Composition 2 | Composition 3 |
|---|---|---|---|
| panels removed; 5 grams of paint added to each bath; baths maintained at a boil for about 15 minutes | | | |
| fourth set of panels immersed | 12 mins./100% | 10—11 mins./100% | 16 mins./100% |
| panels removed; 5 grams of paint added to each bath; baths maintained at a boil for about 15 minutes | | | |
| fifth set of panels immersed | 20 mins./100% | 17—18 mins./100% | 20 mins./60—70% |

Examples 4 and 4—A

Concentrate 4 was first prepared containing the ingredients and concentrations thereof noted below. Two compositions were then prepared from the concentrate; Composition 4 was formulated by diluting a given volume of Concentrate 4 with an equal volume of water; while Composition 4—A was prepared by diluting a given volume of Concentrate 4 with sufficient water to form a solution comprising 45% by volume of Concentrate 4.

Concentrate 4 & Compositions 4 & 4—A

| Ingredient | Concentrate 4 (wt. %) | Composition 4 (g/l) | Composition 4—A (g/l) |
|---|---|---|---|
| Water | 7.0 | | |
| Sequestering agent (Belzac AC) | 1.5 | 10.34 | 9.32 |
| Sodium hydroxide (50%) | 34.0 | 234.80 | 211.32 |
| Potassium hydroxide (50%) | 34.0 | 234.80 | 211.32 |
| Diethylene glycol | 12.0 | 82.87 | 74.58 |
| FA/ETO | 6.0 | 41.44 | 37.29 |
| THFA | 5.0 | 34.53 | 31.08 |
| Amphoteric surfactant (Miranol JEM Conc.) | 0.5 | 3.45 | 3.11 |
| | 100.0% | | |

Equal volumes of Compositions 4 and 4—A were then employed in stripping operations, as follows. Using sets of steel panels measuring 1 inch by 4 inches (approx. 2.5 cm x 10.2 cm) precoated with cathodic electrodeposition paint, the time required to remove 100% of the paint from the panels immersed in the two compositions at various composition temperatures was recorded. At each temperature, 1 panel was immersed in Composition 4 and 1 panel was immersed in Composition 4—A. The results are summarized in Table 2 below.

TABLE 2

| Composition Temperature | Time Required to Strip 100% of Paint From Panels Immersed in Composition | |
|---|---|---|
| | Composition 4 | Composition 4—A |
| 220°F (≑104°C) | 3—4 minutes | 5½—5 minutes |
| 210°F (≑99°C) | 4—5 minutes | 6—7 minutes |
| 200°F (≑93°C) | 7—7½ minutes | 8—9 minutes |
| 190°F (≑88°C) | 8—9 minutes | 9½ minutes |

The ability of Composition 4 to strip paint from 4″ × 12″ (approx. 10.3 cm × 30.5 cm) panels coated with a black, cathodic electrodeposition paint was also evaluated. The total number of panels tested was 46; at a succession of separate moments during continuous use, a single such panel was immersed in Composition 4, and the time of immersion required to remove the indicated percentage of paint from each panel was recorded. In between these measurements, a succession of identical panels were immersed in the composition until 100% of the paint had been removed from each of them, and it was then replaced by the next one. This was intended to simulate the bath loading conditions encountered in commercial use. The results are summarized in Table 3 below.

| Number of | (°F) | Composition Temperature (approx. °C) | Immersion Time (Mins.) | % of Paint Stripped During Time Immersed — Composition 4 |
|---|---|---|---|---|
| 1 | 190 | 88 | 5—5½ | 60 |
| 1 | 190 | 88 | 8—9 | 100 |
| 1 | 200 | 93 | 4—5 | 50 |
| | 200 | 93 | 7—7½ | 100 |
| 1 | 210 | 99 | 3—3½ | 80—90 |
| | 210 | 99 | 4—5 | 100 |
| 5 | 210—220 | 99—104 | — | 100 |
| 4 | 210—220 | 99—104 | — | 100 |
| 5 | 210—220 | 99—104 | — | 100 |
| 1 | 200 | 93 | 6—7 | 90—95 |
| | 200 | 93 | 7½—8 | 100 |
| 5 | 210—220 | 99—104 | — | 100 |
| 5 | 210—220 | 99—104 | — | 100 |
| 1 | 200 | 93 | 8—8½ | 100 |
| 5 | 210—220 | 99—104 | — | 100 |
| 5 | 210—220 | 99—104 | — | 100 |
| 1 | 200 | 93 | 10—10½ | 100 |
| | 200 | 93 | 12—12½ | 100 |
| 5 | 210—220 | 99—104 | — | 100 |
| 1 | 200 | 93 | 11—11½ | 100 |
| | 200 | 93 | 15—15½ | 100 |

The experimental sequence summarized in Table 3 was continued until 100% of the paint could no longer be stripped from an immersed panel. The total painted surface area of those panels from which 100% of the paint had been stripped was calculated, and divided by the volume of the composition employed. The results are summarized in Table 4 below.

TABLE 4

| | Composition 4 |
|---|---|
| Painted Surface Area Stripped/Volume of Composition | 28 sq. ft./U.S. gallon (approx. 68.72 $dm^2$/litre) |

Example 5

An aqueous alkaline concentrate, Composition 5, was formulated as follows:

Composition 5

| Ingredient | % by Wt. |
|---|---|
| Water | 34.8 |
| Sequestering agent (Belzac AC) | 0.5 |
| Sodium hydroxide (50%) | 10.0 |
| Potassium hydroxide (45%) | 10.0 |
| Diethylene glycol | 18.0 |
| FA/ETO | 10.0 |
| THFA | 2.0 |
| Amphoteric surfactant (Miranol JEM Conc.) | 2.0 |
| Methanol | 14.5 |
| | 100.0% |

This concentrate was used in replenishing compositions of the present invention, as well as those prior art compositions containing either furfuryl alcohol alone or both furfuryl alcohol and tetrahydrofurfuryl alcohol. Composition 5 was added to such compositions, after continuous use thereof, in order to extend the operability of such compositions.

The next group of examples represent a series of comparative tests, which exemplify the synergistic properties of hot stripper compositions within the scope of the present invention.

As a first step a control composition was prepared with the following ingredients:

CONTROL COMPOSITION C

| Ingredients | % by Weight |
|---|---|
| Water | 26.5 |
| Sodium hydroxide (50%) | 34.0 |
| Potassium hydroxide (50%) | 34.0 |
| Amphoteric surfactant (Miranol JEM Conc.) | 0.5 |
| Methanol | 5.0 |
| | 100.0% |

Control Composition C was used as the basis for preparing the various other compositions identified in Table 5 below; and those other compositions, as well as Composition C itself, were used to strip the paint from steel panels prepainted with cathodically-electrodeposited green paint films having thicknesses of 1 to 1.5 mil.

The painted panels were immersed in the freshly prepared compositions referred to in Table 5, and maintained therein until 100% of the film was stripped. The times required to accomplish this were recorded and are reported in Table 5. The compositions were then subjected to a rolling boil for six hours, and thereafter were used to strip the paint from steel panels painted like those referred to above. The times needed to strip 100% of the paint films from the panels were recorded, and are reported in Table 5. The ethoxylate used in various of the compositions referred to in Table 5 was the reaction

product of ethylene oxide with THFA, of general formula (iii) above wherein *n* is about 1.5, and is referred to in the Table as "THFA/ETO".

TABLE 5

| Ex. No. | Comp. | Stripping Time in Minutes<br>Fresh Comp. (88°C—99°C) | Boiled Comp. (99°C—105°C) |
|---|---|---|---|
| C—1 | 100 g of C | 31 | not effective in 45 minutes |
| C—2 | 90 g of C and 10 g furfuryl alcohol | 8 | 23½ |
| C—3 | 90 g of C and 10 g of FA/ETO | 9½ | 10½—11 |
| C—4 | 90 g of C and 10 g of THFA | 9 | 10½ |
| C—5 | 90 g of C and 10 g of THFA/ETO | 10 | 13 |
| C—6 | 90 g of C, 5 g of furfuryl alcohol, 5 g THFA | 6 | 17½ |
| C—7 | 90 g of C, 5 g of furfuryl alcohol and 5 g of THFA/ETO | 6 | 18½ |
| 6 | 90 g of C, 5 g of FA/ETO and 5 g of THFA | 6½—7 | 10½—11 |
| 7 | 90 g of C, 5 g of FA/ETO and 5 g of THFA/ETO | 7½—8 | 11 |
| 8 | 90 g of C, 5 g of THFA and 5 g THFA/ETO | 7½ | 11—11½ |
| 9 | 85 g of C, 5 g of furfuryl alcohol, 5 g of FA/ETO and 5 g THFA | 4 | 9½ |
| 10 | 85 g of C, 5 g of FA/ETO, 5 g of THFA and 5 g of THFA/ETO | 5½ | 6½—7 |

Examples Nos. 6 onwards in Table 5 above are compositions according to this invention, and their results may be compared with those obtained using the control compositions of Examples C—2 to C—6; such a comparison reveals the synergistic effects which are displayed by compositions within the scope of the present invention. The loss of effectiveness of a composition including furfuryl alcohol as it is subjected to elevated temperature for prolonged periods is exemplified by the results shown for the compositions of Examples C—6 and C—7. The compositions of Example Nos. 9 and 10 show the improved results that can be achieved by utilizing higher amounts of various of the activating ingredients.

## Claims

1. An aqueous alkaline stripper composition, for use at elevated temperatures to remove siccative coatings from substrates coated therewith, comprising one or more alkaline compounds in a concentration such as to impart a pH of 9.5 or more to the composition, together with an effective amount of at least two of the following three activator materials:

(i) tetrahydrofurfuryl alcohol and furfuryl and/or tetrahydrofurfuryl alcohol ethoxylates of the general formula:

(ii)

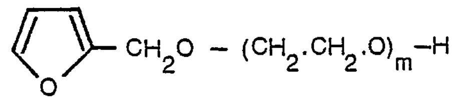

and (iii)

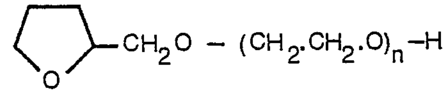

wherein

*m* and *n*, which may be the same or different, each represents the average degree of ethoxylation in the respective ethoxylates, and each of them lies in the range of from 0.5 to 10.

2. An aqueous alkaline stripper composition, for use at elevated temperatures to remove siccative coatings from substrates coated therewith, comprising one or more alkaline compounds in a concentration such as to impart a pH of 9.5 or more to the composition, together with an effective amount of a combination of activator materials, said combination comprising:

(i) tetrahydrofurfuryl alcohol with at least one of the furfuryl and/or tetrahydrofurfuryl alcohol ethoxylates of the general formulae:

(ii)

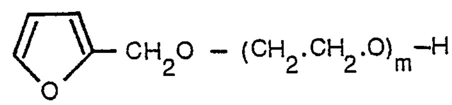

and (iii)

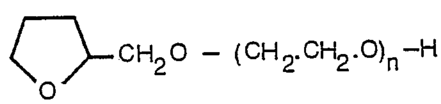

wherein

*m* and *n*, which may be the same or different, each represents the average degree of ethoxylation in the respective ethoxylates, and each of them lies in the range of from 0.5 to 10.

3. A stripper composition as claimed in either of the preceding claims, which includes an ethoxylate of general formula (ii) which is the reaction product of furfuryl alcohol and ethylene oxide and wherein *m* is in the range of from 0.5 to 1.5, preferably in the range of from 0.85 to 1.08.

4. A stripper composition as claimed in any of the preceding claims, which includes an ethoxylate of general formula (iii) which is the reaction product of tetrahydrofurfuryl alcohol and ethylene oxide and wherein *n* is in the range of from 3 to 8.

5. A stripper composition as claimed in any of the preceding claim, in which the total overall concentration of all the activator materials (i)—(iii) present is at least 7 g/l, and at least two of these activator materials are each present in a concentration of at least 2.5 g/l.

6. A stripper composition as claimed in any of the preceding claims, in which the ethoxylate(s) (ii) and/or (iii) is/are present in a concentration of at least 5 g/l.

7. A stripper composition as claimed in any of the preceding claims, in which the concentration of alkaline compound(s) present is effective to impart a pH to the composition in the range of from 9.5 to 14+, and preferably from 12 to 14+.

8. A stripper composition as claimed in any of the preceding claims, which also includes a sequestering agent in an amount effective substantially to prevent the formation of precipitants in the composition.

9. A stripper composition as claimed in any of the preceding claims, which as composition-stabilizing compound also includes one or more of the following, namely aliphatic primary alcohols, aliphatic secondary alcohols, alkyl amines and mixtures thereof, said composition-stabilizing compound(s) being present in an amount effective substantially to prevent separation of said composition.

10. A stripper composition as claimed in claims 7, 8 and 9 which contains at least 80 g/l of the alkaline compound(s), at least 1 g/l of the sequestering agent, and at least 10 g/l of the composition-stabilizing compound(s).

11. A stripper composition as claimed in any of the preceding claims, which also includes at least 0.5 g/l of one or more surfactants.

12. A stripper composition as claimed in any of the preceding claims in which the alkaline compound(s) is/are present in a concentration within the range of from 150 to 350 g/l, said alkaline compound(s) comprising from 3.5 to 350 g/l of sodium hydroxide and from 3.5 to 350 g/l of potassium hydroxide, said stripper composition also containing from 1 to 100 g/l of a sequestering agent, from 50 to 100 g/l of one or more composition-stabilizing compound(s) being methanol and/or monoethanolamine, and/or diethylene glycol and/or *n*-butyl amine, from 2.5 to 200 g/l of tetrahydrofurfuryl alcohol, and from 5 to 200 g/l of the ethoxylate(s) (ii) and (iii), said ethoxylate(s) preferably being those wherein *m* and/or *n* each lies in the range of from 0.85 to 1.08.

13. A process for stripping siccative coatings from substrates coated therewith in which the coated substrate is contacted with a stripper composition as claimed in any of the preceding claims at a composition temperature and for a period sufficient to remove the siccative coating from the substrate, preferably at a temperature of at least 140°F (60°C) and especially in the range of from 180°F to 220°F (approx. 82—104°C) for a period within the range of from 5 seconds up to 1 hour.

14. A process as claimed in claim 13, in which the siccative coating upon the substrate is a cathodically-electrodeposited paint film.

15. An aqueous alkaline composition as claimed in any of the claims 1 to 12, in the form of a concentrate intended for making up the hot stripper composition employed in the process claimed in claim 13 or claim 14, said concentrate being such that when added to water at a concentration level of from 10% to 99% by volume it is effective to strip siccative coatings from metallic substrates.

16. A make-up concentrate as claimed in claim 15, which contains from 10% to 85 wt. % of water, from 10 to 50 wt. % of an alkaline component which in turn comprises from 0.5 to 50 wt. % of sodium hydroxide and from 0.5 to 50 wt. % of potassium hydroxide, said concentrate also containing from 0.1 to 10 wt. % of a sequestering agent, from 1 to 20 wt. % of a composition-stabilizing compound being methanol and/or monoethanolamine and/or diethylene glycol and/or *n*-butyl amine, from 1 to 10 wt. % of tetrahydrofurfuryl alcohol and from 1 to 20 wt. % of the reaction product(s) of ethylene oxide with furfuryl alcohol and/or tetrahydrofurfuryl alcohol represented by the respective general formulae (ii) and (iii), preferably wherein respectively *m* and *n* are in the range of from 0.5 to 1.5, above all from 0.85 to 1.08.

**Revendications**

1. Une composition aqueuse alcaline de décapage, destinée à une utilisation à températures élevées pour éliminer les revêtements siccatifs à partir de substrats recouverts de ceux-ci, comprenant un ou plusieurs composés alcalins dans une concentration telle qu'elle fournit un pH de 9,5 ou plus à la composition, avec une quantité efficace d'au moins deux des trois matériaux suivants activateurs:

(i) alcool tétrahydrofurfuryl et éthoxylate d'alcool furfuryl et/ou tétrahydrofurfuryl de formules générales:

(ii) 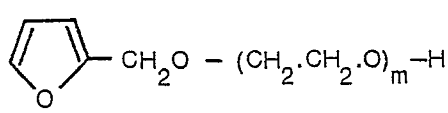

and (iii) 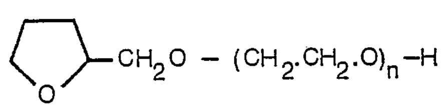

dans lesquelles *m* et *n* qui peuvent être égaux ou différents, représentent chacun le degré moyen d'éthoxylation dans les éthoxylates respectifs, et chacun d'eux se trouve dans le domaine de 0,5 à 10.

2. Une composition aqueuse alcaline de décapage destinée à une utilisation à températures élevées pour éliminer les revêtements siccatifs de substrats revêtus de ceux-ci, comprenant un ou plusieurs composés alcalins dans une concentration telle qu'elle donne un pH de 9,5 ou plus à la composition, ensemble avec une quantité efficace d'une combinaison de matériaux activateurs, ladite combinaison comprenant:

(i) l'alcool tétrahydrofurfuryl avec au moins un des éthoxylates d'alcool furfuryl et/ou tétrahydrofurfuryl de formules générales:

(ii) 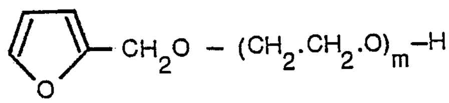

and (iii) 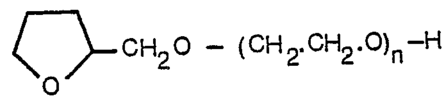

dans lesquelles *m* et *n* qui peuvent être égaux ou différents, représentent chacun le degré moyen d'éthoxylation dans les éthoxylates respectifs et, chacun d'eux se trouve dans le domaine de 0,5 à 10.

3. Une composition de décapage selon l'une quelconque des revendications précédentes, qui inclut un éthoxylate de formule générale (ii), lequel est le produit de réaction d'alcool furfuryl et d'oxyde d'éthylène et dans lequel *m* dans le domaine de 0,5 à 1,5, de préférence dans le domaine de 0,85 à 1,08.

4. Une composition de décapage selon l'une quelconque des revendications précédentes, qui comprend un éthoxylate de formule générale (iii) qui est le produit de réaction de l'alcool tétrahydrofurfuryl et de l'oxyde d'éthylène et dans lequel *n* est dans le domaine de 3 à 8.

5. Une composition de décapage selon l'une quelconque des revendications précédentes, dans laquelle la concentration totale de tous les matériaux activateurs (i)—(iii) présente est d'au moins 7 g/l et au moins deux de ces matériaux activateurs sont chacun présents dans une concentration d'au moins 2,5 g/l.

6. Une composition de décapage selon l'une quelconque des revendications précédentes, dans laquelle les éthoxylates (ii) et/ou (iii) sont présents dans une concentration d'au moins 5 g/l.

7. Une composition de décapage selon l'une quelconque des revendications précédentes, dans laquelle la concentration du (des) composé(s) alcalin(s) présent(s) est efficace pour donner un pH à la combinaison dans le domaine de 9,5 à 14+ et de préférence de 12 à 14+.

8. Une composition de décapage selon l'une quelconque des revendications précédentes, qui comprend également un agent de séquestration dans une quantité efficace essentiellement pour empêcher la formation de précipitants dans la composition.

9. Une composition de décapage selon l'une quelconque des revendications précédentes, qui, en tant que composé stabilisant la composition, comprend également un ou plusieurs des alcools suivants, à savoir, les alcools aliphatiques primaires, aliphatiques secondaires, les alcoylamines et les mélanges de ceux-ci, le(s)dit(s) composé(s) stabilisant la composition étant présent(s) en quantité suffisamment efficace pour éviter la séparation de ladite composition.

10. Une composition selon les revendications 7, 8 et 9, qui contient au moins 80 g/l de composé(s) alcalin(s), au moins 1 g/l d'agent séquestrant et au moins 10 g/l de composé(s) stabilisant la composition.

11. Une composition de décapage selon l'une quelconque des revendications précédentes, qui contient également au moins 0,5 g/l d'un ou plusieurs agents tensioactifs.

12. Une composition de décapage selon l'une quelconque des revendications précédentes, dans laquelle le(s) composé(s) alcalin(s) est(sont) présent(s) dans une concentration dans le domaine de 150 à 350 g/l, le(s)dit(s) composé(s) alcalin(s) comprenant de 3,5 à 350 g/l d'hydroxyde de sodium et de 3,5 à 350 g/l d'hydroxyde de potassium, ladite composition de décapage contenant également de 1 à 100 g/l d'agent séquestrant, de 50 à 100 g/l d'un ou plusieurs composés stabilisant la composition, à savoir le méthanol et/ou la monoéthanolamine et/ou le diéthylène glycol et/ou la *n*-butylamine, de 2,5 à 200 g/l d'alcool tétrahydrofurfuryl et de 5 à 200 g/l d'alcool tétrahydrofurfuryl et de 5 à 200 g/l d'éthoxylate(s) (ii) et (iii), le(s)dit(s) éthoxylate(s) étant de préférence celui(ceux) dans le(s)quel(s) *m* et *n* sont chacun compris dans le domaine de 0,85 à 1,08.

13. Un procédé pour décaper les revêtements siccatifs à partir de substrats revêtus de ceux-ci, dans lequel le substrat revêtu est mis en contact avec une composition de décapage selon l'une quelconque des revendications précédentes, à une température de composition et pendant une période suffisante pour éliminer le revêtement siccatif à partir du substrat, de préférence à une température d'au moins 140°F (60°C) et en particulier dans le domaine de 180°F à 200°F (approximativement 82—104°C) pendant une période allant dans le domaine de 5 secondes à une heure.

14. Un procédé selon la revendication 13, dans lequel le revêtement siccatif sur le substrat est une pellicule de peinture cathodiquement électrodéposée.

15. Une composition alcaline aqueuse selon l'une quelconque des revendications 1 à 12, sous la forme d'un concentré destiné à fabriquer la composition chaude de décapage utilisée dans le procédé selon la revendication 13 ou 14, ledit concentré étant tel que lorsque'on ajoute de l'eau à un niveau de concentration de 10% à 99% en volume, il est efficace pour décaper le revêtement siccatif à partir de substrats métalliques.

16. Un concentré selon la revendication 15, qui contient de 10 à 85% en poids d'eau, de 10 à 50% en poids d'un composé alcalin qui, à son tour, comprend de 0,5 à 50% en poids d'hydroxyde de

sodium et de 0,5 à 50% en poids d'hydroxyde de potassium, ledit concentré contenant également de 0,1 à 10% en poids d'un agent séquestrant, de 1 à 20% en poids d'un composé stabilisant la composition, à savoir du méthanol, et/ou de la monoéthanolamine, et/ou du diéthylène glycol et/ou la *n*-butylamine, de 1 à 10% en poids d'alcool tétrahydrofurfuryl et de 1 à 20% en poids du(des) produit(s) de réaction d'oxyde d'éthylène avec de l'alcool furfuryl et/ou de l'alcool tétrahydrofurfuryl représenté par les formules respectives générales (ii) et (iii), de préférence dans lesquelles *m* et *n* sont respectivement dans le domaine de 0,5 à 1,5 en particulier de 0,85 à 1,08.

**Patentansprüche**

1. Wässrige, alkalische Abbeiz-Zusammensetzung zur Verwendung bei erhöhten Temperaturen zur Entfernung von Sikkativ-Überzügen von damit überzogenen Substraten, enthaltend eine oder mehrere alkalische Verbindungen in einer solchen Konzentration, daß die Zusammensetzung einen pH-Wert von 9,5 oder mehr besitzt, zusammen mit einer wirksamen Menge von mindestens zwei der folgenden drei Aktivatoren:

(i) Tetrahydrofurfurylalkohol und Furfuryl- und/oder Tetrahydrofurfurylalkohol-Ethoxylaten der allgemeinen Formel:

(ii)

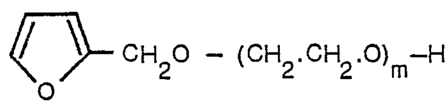

and (iii)

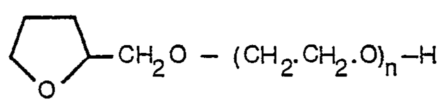

worin *m* und *n* gleich oder verschieden sein können und jeweils den durchschnittlichen Grad der Ethoxylierung in den entsprechenden Ethoxylaten anzeigen und jeweils im Bereich von 0,5 bis 10 liegen.

2. Wässrige alkalische Abbeiz-Zusammensetzung zur Verwendung bei erhöhten Temperaturen zur Entfernung von Sikkativ-Überzügen von damit überzogenen Substraten, enthaltend eine oder mehrere alkalische Verbindungen in einer solchen Konzentration, daß die Zusammensetzung einen pH-Wert von 9,5 oder mehr besitzt, zusammen mit einer wirksamen Menge einer Kombination von Aktivatoren, wobei die Kombination besteht aus

(i) Tetrahydrofurfurylalkohol mit mindestens einem der Furfuryl- und/oder Tetrahydrofurfurylalkohol-ethoxylaten der allgemeinen Formeln:

(ii)

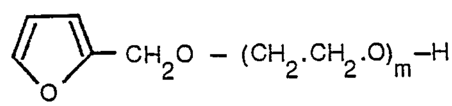

and (iii)

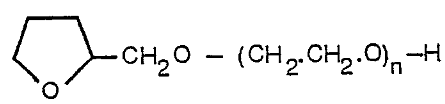

worin *m* und *n* gleich oder verschieden sein können und jeweils den durchschnittlichen Grad der Ethoxylierung in den entsprechenden Ethoxylaten anzeigen und jeweils im Bereich von 0,5 bis 10 liegen.

3. Abbeizzusammensetzung gemäß einem der vorgehenden Ansprüche, enthaltend ein Ethoxylat der allgemeinen Formel (ii), welches das Reaktionsprodukt von Furfurylalkohol und Ethylenoxid ist, wobei *m* im Bereich von 0,5 bis 1,5, vorzugsweise im Bereich von 0,85 bis 1,08 liegt.

4. Abbeiz-Zusammensetzung gemäß einem der vorgehenden Ansprüche, enthaltend ein Ethoxylat der allgemeinen Formel (iii), welches das Reaktionsprodukt von Tetrahydrofurfurylalkohol und Ethylenoxid ist, wobei *n* im Bereich von 3 bis 8 liegt.

5. Abbeiz-Zusammensetzung gemäß einem der vorgehenden Ansprüche, in welcher die Gesamtkonzentration von allen Aktivatoren (i) bis (iii) mindenstens 7 g/l ausmacht und zumindest zwei dieser Aktivatoren anwesend sind jeder in einer Konzentration von mindestens 2,5 g/l.

6. Abbeiz-Zusammensetzung gemäß einem der vorgehenden Ansprüche, in welcher das oder die Ethoxylate (ii) und/oder (iii) anwesend sind in einer Konzentration von mindestens 5 g/l.

7. Abbeiz-Zusammensetzung gemäß einem der vorgehenden Ansprüche, in welcher die Konzentration der alkalischen Verbindung(en) wirksam ist um der Zusammensetzung einen pH-Wert im Bereich von 9,5 bis 14+ und verzugsweise von 12 bis 14+ zu erteilen.

8. Abbeiz-Zusammensetzung gemäß einem der vorgehenden Ansprüche, die zusätzlich ein Sequestrierungsmittel enthält in einer Menge wirksam um im wesentlichen die Bildung von Niederschlägen in der Zusammensetzung zu vermeiden.

9. Abbeiz-Zusammensetzung gemäß einem der vorgehenden Ansprüche, welche als eine die Zusammensetzung stabilisierende Verbindung auch eine oder mehrere der folgenden Verbindungen enthält, nämlich aliphatische primäre Alkohole, aliphatische sekundäre Alkhole, Alkylamine und Mischungen davon, wobei diese die Zusammensetzung stabilisierenden Verbindungen anwesend sind in einer Menge wirksam um die Trennung der Zusammensetzung im wesentlichen zu verhindern.

10. Abbeiz-Zusammensetzung gemäß einem der Ansprüche 7, 8 und 9, die zumindest 80 g/l der alkalischen Verbindung(en), mindestens 1 g/l des Sequestrierungsmittels und mindestens 10 g/l der die Zusammensetzung stabilisierenden Verbindung(en) enthält.

11. Abbeiz-Zusammensetzung gemäß einem der vorgehenden Ansprüche, die auch mindestens 0,5 g/l eines oder mehrerer oberflächenaktiver Stoffe enthält.

12. Abbeiz-Zusammensetzung gemäß einem der vorgehenden Ansprüche, in welcher die alkalische Verbindung(en) in einer Konzentration im Bereich von 150 bis 350 g/l anwesend ist/sind, wobei die alkalische Verbindung(en) 3,5 bis 350 g/l Natriumhydroxid und 3,5 bis 350 g/l Kaliumhydroxid enthält/enthalten, und die Abbeiz-Zusammensetzung auch 1 bis 100 g/l eines Sequestrierungsmittels, 50 bis 100 g/l einer oder mehrerer die Zusammensetzung stabilisierender Verbindungen nämlich Methanol und/oder Monoethanolamin, und/oder Diethylenglykol und/oder n-Butylamin, 2,5 bis 200 g/l Tetrahydrofurfurylalkohol und 5 bis 200 g/l der Ethoxylate (ii) und/oder (iii), die vorzugsweise solche sind in denen *m* und/oder *n* im Bereich von 0,85 bis 1,08 liegt, enthält bzw. enthalten.

13. Verfahren zum Abbeizen von Sikkativ-Überzügen von damit überzogenen Substraten, wobei das überzogene Substrat in Berührung gebracht wird mit einer Abbeiz-Zusammensetzung gemäß einem der vorgehenden Ansprüche bei einer Temperatur der Zusammensetzung und während einer Zeitdauer ausreichend zur Entfernung des Sikkativüberzugs von dem Substrat, vorzugsweise bei einer Temperatur von mindestens 140°F (60°C) und insbesonders im Bereich von 180°F bis 220°F (etwa 82 bis 104°C) während einer Zeitdauer im Bereich von 5 Sekunden bis 1 Stunde.

14. Verfahren gemäß Anspruch 13, wobei der Sikkativ-Überzug auf dem Substrat ein kathodischgalvanischer Farbfilm ist.

15. Wässrige alkalische Zusammensetzung gemäß einem der Ansprüche 1 bis 12 in der Form eines Konzentrates zur Herstellung der heißen Abbeiz-Zusammensetzung wie sie angewandt wird in dem Verfahren gemäß Anspruch 13 oder Anspruch 14, wobei das Konzentrat derart ist, daß es bei Zugabe zu Wasser in einer Konzentration von 10 bis 99 Vol.-% wirksam ist um einen Sikkativ-Überzug von metallischen Substraten abzubeizen.

16. Konzentrat gemäß Anspruch 15, enthaltend 10 bis 85 Gew.-% Wasser, 10 bis 50 Gew.-% eines alkalischen Bestandteils, der seinerseits im wesentlichen aus 0,5 bis 50 Gew.-% Natriumhydroxid und 0,5 bis 50 Gew.-% Kaliumhydroxid besteht, wobei das Konzentrat auch 0,1 bis 10 Gew.-% eines Sequestrierungsmittels, 1 bis 20 Gew.-% einer die Zusammensetzung stabilisierenden Verbindung, nämlich Methanol und/oder Monoethanolamin und/oder Diethylenglykol und/oder n-Butylamin, ferner 1 bis 10 Gew.-% Tetrahydrofurfurylalkohol und 1 bis 20 Gew.-% des (der) Reaktionsprodukts (Reaktionsprodukte) von Ethylenoxid mit Furfurylalkohol und/oder Tetrahydrofurfurylalkohol dargestellt durch die entsprechenden allgemeinen Formeln (ii) und (iii), wobei vorzugsweise *m* und *n* Bereich von 0,5 bis 1,5 und insbesonders von 0,85 bis 1,08 liegen, enthält.